# EUROPÄISCHE PATENTSCHRIFT

(11) **EP 2 127 094 B1**
(45) Veröffentlichungstag und Bekanntmachung des Hinweises auf die Patenterteilung: **29.12.2010**
(21) Anmeldenummer: 08706835.9
(22) Anmeldetag: 26.01.2008
(51) Int. Cl.: H04B 1/00, H04B 1/40, H04B 1/38

(54) **Modulare Schaltungsanordnung zur Dämpfungskompensation**
Modular circuit arrangement used for attenuation compensation
Ensemble circuit modulaire pour la compensation de l'atténuation

(30) Priorität: 26.01.2007 DE 102007004911
(43) Veröffentlichungstag der Anmeldung: 02.12.2009
(73) Patentinhaber: Funkwerk Dabendorf GmbH, 15806 Dabendorf (DE)
(72) Erfinder: NAST, Helmut, 12557 Berlin (DE); JACOBI, Raimo, 10318 Berlin (DE); HEYDER, Frank, 12623 Berlin (DE)
(74) Vertreter: Schubert, Klemens
(86) Internationale Anmeldenummer: PCT/DE2008/000170
(87) Internationale Veröffentlichungsnummer: WO 2008/089755

(56) Entgegenhaltungen:
- EP-A- 1 841 083
- WO-A-02/078202
- WO-A-2004/082162
- US-A1- 2006 141 944

## Beschreibung

Die Erfindung betrifft eine mehrbandfähige, zumindest teilweise modular aufgebaute und damit mehrteilige Schaltungsanordnung zum Kompensieren der Dämpfung, welcher ein- und ausgehende HF-Funksignale in Signalwegen zwischen einem Sende- und Empfangsgerät und einer mit diesem Sende- und Empfangsgerät genutzten externen Antenne unterliegen. Sie bezieht sich vorzugsweise, jedoch nicht ausschließlich auf eine für den Betrieb mobiler Sende- und Empfangsgeräte, insbesondere von Mobilfunkgeräten, an einer externen Antenne vorgesehene Schaltungsanordnung.

Beispielsweise in Kraftfahrzeugen werden Mobilfunkgeräte zur Vermeidung elektromagnetischer Felder in der Fahrgastzelle beim Anschluss an eine Freisprecheinrichtung über ein HF-Kabel (Antennenzuleitungskabel) und gegebenenfalls über einen elektromagnetischen Koppler beziehungsweise einen kapazitiven oder induktiven Koppler mit einer extern am Fahrzeug angebrachten Antenne verbunden. Dabei unterliegen an der externen Antenne eingehende Signale, ebenso wie von dem Mobilfunkgerät über die Antenne ausgesendete Signale, in dem HF-Kabel und dem gegebenenfalls vorhandenen Koppler einer unerwünschten Dämpfung, welche vorzugsweise mittels einer in die Signalwege zwischen der Antenne und dem Sende- und Empfangsgerät einzuordnenden speziellen Schaltungsanordnung kompensiert wird. Derartige Schaltungsanordnungen sind bereits in unterschiedlichen Ausbildungsformen bekannt geworden.

So offenbart beispielsweise die DE 195 36 640 A1 eine entsprechende, für den GSM-Mobilfunk ausgebildete, allerdings nicht mehrbandfähige Schaltungsanordnung. Die Schaltungsanordnung weist einen Empfangszweig mit einem rauscharmen Empfangsverstärker und einen Sendezweig mit einem Leistungsverstärker auf, wobei der Signalpfad im Falle eines durch eine Detektorschaltung erkannten Sendesignals eines an der Schaltungsanordnung betriebenen Mobilfunkgeräts über den Sendezweig und in Abwesenheit eines Sendesignals über den Empfangszweig geführt ist. Die Umschaltung des Signalpfades erfolgt mittels spezieller HF-Umschalter. Bei der in der Druckschrift beschriebenen Schaltungsanordnung werden zudem in Abhängigkeit des Vorhandenseins eines Sendesignals der Empfangsverstärker und der Leistungsverstärker wechselnd ab- beziehungsweise angeschaltet. Dies dient insbesondere der Reduzierung des Energieverbrauchs, und zwar vor allem im Hinblick auf den Leistungsverstärker, welcher durch diese Maßnahme aufgrund der Zeitschlitz gesteuerten Signalübertragung des GSM-Verfahrens innerhalb eines mehrere Zeitschlitze gleicher Länge umfassenden Zeitrahmens immer lediglich für die Dauer des beziehungsweise der Sendezeitschlitze angeschaltet sein muss.

Durch die DE 199 13 064 C1 wird eine ähnliche Schaltungsanordnung für einen dualbandigen Betrieb beschrieben, welche vorzugsweise für den Betrieb nach dem GSM900- und dem DCS-Standard beziehungsweise dem GSM1800-Standard arbeitender Mobilfunkgeräte konzipiert ist. Die Schaltungsanordnung weist demnach Signalzweige für zwei unterschiedliche Frequenzbänder mit jeweils einem Sende- und einem Empfangszweig auf. Die Schaltungsteile für die beiden Frequenzbänder sind antennen- und mobilgeräteseitig jeweils durch einen Diplexer gegeneinander entkoppelt. Innerhalb eines jeden Schaltungsteils erfolgt eine Umschaltung des Signalpfades in Abhängigkeit der Detektion eines Sendesignals wiederum mit Hilfe von HF-Umschaltern. Darüber hinaus ist auch bei dieser Schaltungsanordnung ein spezielles Schaltungsregime vorgesehen, nach welchem die Sende- und Empfangsverstärker wechselweise ausbeziehungsweise angeschaltet werden. Die Schaltungsanordnung ist derart ausgebildet, dass im Falle eines für das Frequenzband eines Schaltungsteils detektierten Sendesignals nicht nur der Empfangsverstärker in dem betreffenden Schaltungsteil ausgeschaltet wird, sondern auch der Empfangsverstärker des jeweils anderen Schaltungsteils. Hierdurch wird verhindert, dass Teile des Sendesignals über den lediglich eine endlich große Übersprechdämpfung aufweisenden Diplexer auf den andernfalls eingeschalteten Empfangsverstärker des anderen Schaltungsteils gelangen und an diesem Oberwellen erzeugen, welche zusätzlich über die Antenne abgestrahlt werden und so das eigentliche Sendesignal in unerwünschter und unzulässiger Weise beeinflussen.

Aus der EP 137 11 44 B1 ist ferner eine gattungsgemäße Schaltungsanordnung bekannt, mit deren Hilfe der wahlweise Betrieb von nach dem GSM900-Standard, dem DCS-Standard oder dem UMTS-Standard arbeitender Geräte an einer Freisprecheinrichtung und damit einer externen Antenne betreibbar sind. Auch bei dieser Schaltungsanordnung ist ein spezielles Schaltregime zur Umschaltung der Signalpfade und zum Aus- und Anschalten von Leistungs- und Empfangsverstärkern realisiert.

Eine andere dualbandige schaltungsanordnung ist in WO02/078 202 offenbart.

Jede der vorgenannten Schaltungsanordnungen ist jedoch für bestimmte Einsatzfälle konzipiert. Die Schaltungsanordnungen sind insoweit nicht variabel oder gar universell einsetzbar, so dass für in anderen Ländern, beispielsweise den USA, verwendete Mobilfunkstandards wiederum eigene Lösungen realisiert werden müssen. Gleiches gilt im Hinblick auf die Datenübertragung beziehungsweise eine mögliche Erweiterung der Funktionalität beispielsweise zur Verwendung des WLAN- oder WiMAX-Standards und zur Nutzung einer entsprechenden Schaltungsanordnung mit nach diesen Standards arbeitenden Geräten.

Auf der anderen Seite ist es aus Kostengründen nicht praktikabel, eine Schaltungsanordnung bereitzustellen, welche gleichermaßen für alle vorgenannten Mobilfunkstandards und Datenübertragungssysteme verwendbar ist. Insbesondere im Hinblick auf die Vielzahl erforderlicher Filtereinheiten, Duplexer, Diplexer und dergleichen wäre eine solche Schaltungsanordnung viel zu teuer. Insoweit wäre es wünschenswert, über eine flexiblere Lösung zu verfügen.

Aufgabe der Erfindung ist es, eine Schaltungsanordnung zum Kompensieren der in Signalwegen zwischen einem Sende- und Empfangsgerät für die Funkkommunikation und einer mit diesem Sende- und Empfangsgerät genutzten externen, von dem Sende- und Empfangsgerät getrennt angeordneten Antenne auftretenden Dämpfung bereitzustellen, welche für unterschiedliche Mobilfunkstandards und/oder die Datenübertragung geeignet ist und dabei flexibel sowie kostengünstig an unterschiedliche Erfordernisse anpassbar ist.

Die Aufgabe wird durch eine Schaltungsanordnung mit den Merkmalen des Hauptanspruchs gelöst. Vorteilhafte Aus- beziehungsweise Weiterbildungen der Erfindung sind durch die Unteransprüche gegeben.

Bei der zur Lösung der Aufgabe ausgebildeten Schaltungsanordnung handelt es sich um eine mehrbandfähige Schaltungsanordnung. Die Schaltungsanordnung verfügt über mehrere Empfangs- und Sendezweige, die antennenseitig und geräteseitig jeweils zusammengeführt sind. Sie besteht aus Leistungsverstärkern, Empfangsverstärkern, mindestens einem Splitter, mindestens einem Kombinierer (im Weiteren auch als Combiner bezeichnet) und aus zur Einnahme unterschiedlicher Schaltzustände ausgebildeten HF-Schaltmitteln zum Schalten von Signalwegen für die Übertragung von Sprach- oder Datensignalen zwischen einem mit der Schaltungsanordnung betriebenen Sende- und Empfangsgerät und der Antenne unter Nutzung der vorgenannten Signalzweige. Ferner umfasst die Schaltungsanordnung eine Detektorschaltung zur Detektion eines von dem betreffenden Sende- und Empfangsgerät ausgehenden Sendesignals und zur Bereitstellung von Steuersignalen zur Betätigung der vorgenannten HF-Schaltmittel sowie Duplexer und Frequenz- und/oder Bandfilter. Dabei ist die Schaltungsanordnung so ausgelegt, dass die HF-Schaltmittel im Grundzustand der Schaltungsanordnung einen Schaltzustand einnehmen, bei dem das Sendeund Empfangsgerät und die Antenne über einen Empfangszweig der Schaltungsanordnung miteinander verbunden sind. Ferner sind die vorgenannten Komponenten der Schaltungsanordnung so verschaltet und entsprechend dem jeweiligen Schaltzustand der HF-Schaltmittel miteinander in Wirkverbindung gebracht, dass die Schaltungsanordnung nach der erstmaligen Detektion eines Sendesignals des mit ihr betriebenen Sende- und Empfangsgeräts und für die nachfolgende Dauer des Bestehens einer Sprach- oder Datenverbindung zu diesem Sende- und Empfangsgerät, in Abhängigkeit von der Art des Sende- und Empfangsgeräts und folglich des detektierten Sendesignals, einen von zwei möglichen Betriebsmodi einnimmt. Entsprechend eines der möglichen Betriebsmodi sind dabei das Sende- und Empfangsgerät und die Antenne gleichzeitig über einen Empfangszweig und einen Sendezweig miteinander verbunden, welche antennenseitig und geräteseitig jeweils an einem Duplexfilter beziehungsweise Duplexer zusammengeführt sind. Diesen aktiven Betriebsmodus nimmt die Schaltungsanordnung ein, sofern durch ihre Detektorschaltung ein Sendesignal eines voll duplexfähigen Sende- und Empfangsgerätes beziehungsweise eines nach einem Übertragungsprotokoll mit Duplexbetrieb arbeitenden Sende- und Empfangsgerätes detektiert wird. Entsprechend einem weiteren, nicht duplexfähigen aktiven Betriebsmodus der erfindungsgemäßen Schaltungsanordnung sind das Sende- und Empfangsgerät und die Antenne nach der Detektion eines Sendesignals des Sende- und Empfangsgeräts für die Dauer des Bestehens einer Verbindung zu dem Sendeund Empfangsgerät, durch wechselnde Schaltzustände der HF-Schaltmittel, bei Anwesenheit eines Sendesignals über einen Sendezweig der Schaltungsanordnung und bei Fehlen eines Sendesignals über einen Empfangszweig miteinander verbunden. Die HF-Schaltmittel werden dabei zur Einnahme dieser wechselnden Schaltzustände aufgrund entsprechender Steuersignale der Detektorschaltung angesteuert.

Erfindungsgemäß ist die Schaltungsanordnung zumindest teilweise modular ausgebildet und besteht aus einem antennenseitig angeordneten universellen Frontend-Modul mit HF-Schaltmitteln zum antennenseitigen Schalten der Signalwege, einem breitbandigen Empfangsverstärker und mindestens einem, das Ausgangssignal des Empfangsverstärkers auf mehrere Ausgänge des Frontend-Moduls aufteilenden Splitter sowie einem geräteseitig angeordneten, mit dem Sende- und Empfangsgerät über die Detektorschaltung gekoppelten universellen Backend-Modul mit HF-Schaltmitteln zum geräteseitigen Schalten der Signalwege, mindestens einem Empfangsverstärker und mindestens einem, die Eingangssignale mehrerer Eingänge des Backend-Moduls zusammenführenden Combiner. Das Frontend- und das Backend-Modul sind extern, mit den übrigen Schaltungskomponenten beschaltet. Diese Schaltungskomponenten, nämlich die Leistungsverstärker, die Duplexer, die zwischen dem Splitter oder einem der Splitter des Frontend-Moduls und dem Combiner oder einem der Combiner des Backend-Moduls angeordneten Frequenz- und/oder Bandfilter sowie die Detektoreinheit, sind dabei entsprechend dem jeweiligen Einsatzzweck der Schaltungsanordnung und den im Zusammenhang damit von ihr zu unterstützenden Frequenzbandbereichen und Funkstandards ausgebildet und bemessen. Das heißt die universellen Module, nämlich das Frontend- und das Backend-Modul können je nach dem Einsatzfall mit unterschiedlichen Leistungsverstärkern und verschiedenen Frequenz- und/oder Bandfiltern kombiniert und unterschiedlich verschaltet werden sowie mit einer jeweils an die mit der Schaltungsanordnung, entsprechend ihrer konkreten Konfiguration, nutzbaren Sende- und Empfangsgeräte angepassten Sendesignaldetektoreinheit betrieben werden. Hierbei ist der Vorteil gegeben, dass die selbst im Falle einer eventuell redundanten Anordnung oder Auslegung ihrer Funktionselemente vergleichsweise preiswert zu realisierenden Schaltungskomponenten (so insbesondere die Empfangsverstärker, Splitter und Combiner) Bestandteile der universellen Module, also des Frontend- und des Backend-Moduls, sind, während die teureren Frequenzselektionsmittel, wie insbesondere Frequenz- und Bandfilter, zur Vermeidung von Redundanzen dieser Komponenten jeweils entsprechend der konkreten Erfordernisse zur Beschaltung der universellen Module ausgewählt werden. Die ungenutzten Anschlüsse des Frontend- und des Backend-Moduls sind vorzugsweise jeweils mit einem Widerstand gegen Masse abgeschlossen.

Die erfindungsgemäße Schaltungsanordnung ist entsprechend vorteilhafter Weiterbildungen so gestaltet, dass neben dem Frontend-Modul und dem Backend-Modul weitere ihrer Schaltungsteile in Modulform ausgebildet sind. So sind gemäß einer vorgesehenen Ausbildungsform die in den Empfangszweigen, zwischen den Ausgängen des Frontend-Moduls beziehungsweise seines Splitters oder eines seiner Splitter und den Eingängen des Backend-Moduls beziehungsweise seines Combiners oder einer seiner Combiner angeordneten Frequenz- und/oder Bandfilter als Kammfilter in einem Modul zusammengefasst. Mittels des entsprechenden Splitters in dem Frontend-Modul und der zwischen seinen Ausgängen und dem Eingang des entsprechenden Combiners im Backend-Modul angeordneten Selektionsmittel beziehungsweise Filter ist es möglich, bestimmte, nämlich die entsprechend dem Einsatzzweck jeweils benötigten Frequenzbänder und/oder Frequenzbereiche herauszufiltern. Unabhängig davon, ob die Filter als einzelne, jeweils einem Ausgang des betreffenden Splitters nachgeschaltete Einheiten oder in Modulform ausgebildet sind, sind diese, wie auch andere Schaltungsteile, gegebenenfalls noch mit Dämpfungsgliedern oder anderen Einheiten zur Dämpfungsanpassung kombiniert. Letzteres gilt insbesondere auch für die Leistungsverstärker, deren Eingänge zur Anpassung an die jeweils konkret gegebenen Verhältnisse, das heißt an die in den Signalwegen zwischen dem Sende- und Empfangsgerät und der externen Antenne jeweils festgestellte Dämpfung mit Dämpfungsgliedern beschaltet sein können. Durch diese Anpassungsmöglichkeit kann beim Vorliegen einer Konfiguration mit einer gegenüber anderen Konfigurationen von Hause aus vergleichsweise geringen Dämpfung ein Übersteuern des Sendesignals durch eine zu hohe Verstärkung vermieden beziehungsweise an den Ausgängen der Sendeverstärker ein Signal mit einem definierten Pegel zur Verfügung gestellt werden.

Gemäß einer weiteren vorteilhaften Ausbildungsform der Erfindung umfasst die Schaltungsanordnung zur Realisierung der Sendezweige und der darin angeordneten Leistungsverstärker ein entsprechendes Verstärkermodul beziehungsweise Leistungsverstärkermodul. Auch die Detektorschaltung ist entsprechend einer vorgesehenen Weiterbildung der Erfindung in einer modularen Bauform ausgebildet, so dass auch hier über eine Diversifizierung in unterschiedliche, mit dem Backend-Modul koppelbare Detektormodule die Schaltungsanordnung zum Betreiben verschiedener Sende- und Empfangsgeräte konfigurierbar ist.

Wie bereits ausgeführt, eröffnet die erfindungsgemäße Schaltungsanordnung den Vorteil, dass flexibel beziehungsweise universell einsetzbare Frontend- und Backend-Module mit einem vergleichsweise einfachen und kostengünstigen Aufbau vorgehalten und je nach dem vorgesehenen Einsatzzweck mit einer unterschiedlichen, hinsichtlich der Filter im Einzelfalle gegenüber diesen Grundmodulen doch eher aufwendigeren Außenbeschaltung versehen werden können.

Unter Berücksichtigung der vorstehenden Ausführungen ist eine Ausbildungsform der Erfindung vorgesehen, welche für den wahlweisen Betrieb von nach dem GSM900-, nach dem GSM1800- oder dem UMTS-Standard arbeitenden Sendeund Empfangsgeräten konfiguriert ist. Eine andere Ausführungsform ist für den wahlweisen Betrieb von Mobilfunkgeräten konfiguriert, welche entsprechend einem der derzeit bekannten US-Mobilfunkstandards, nämlich US-GSM850-, US-GSM1900- oder einem CDMA-Standard in einem oder beiden der vorgenannten Frequenzbänder arbeiten.

Eine ganz besonders vorteilhafte Ausbildungsform der erfindungsgemäßen Schaltungsanordnung ist für den wahlweisen Betrieb von mobilen Sende- und Empfangsgeräten ausgebildet, welche nach dem GSM900- oder dem US-GSM/CDMA850-, dem GSM1800- oder dem US-GSM/CDMA1900-, dem WLANoder dem WiMAX-Standard arbeiten. Sie ist somit für nahezu alle derzeit verbreiteten Funkübertragungsstandards in Europa oder in den U.S.A. verwendbar. Die in dem Frontend- und dem Backend-Modul vorgesehenen HF-Schaltmittel können dazu eine entsprechende Anzahl unterschiedlicher Schaltzustände einnehmen, wobei sie den jeweils benötigten Schaltzustand durch die Ansteuerung mit einem von der Detektorschaltung bereitgestellten Steuersignal oder einem aus einem derartigen Steuersignal abgeleiteten Signal einnehmen. Vorzugsweise ist die Schaltungsanordnung dabei so ausgebildet, dass die entsprechenden Steuersignale der Detektorschaltung sowohl dem Frontend-Modul als auch dem Backend-Modul zugeführt werden und in den Modulen jeweils eine Logik angeordnet ist, welche aus den Steuersignalen der Detektorschaltung das jeweils zutreffende Schaltsignal für die HF-Schaltmittel ableitet.

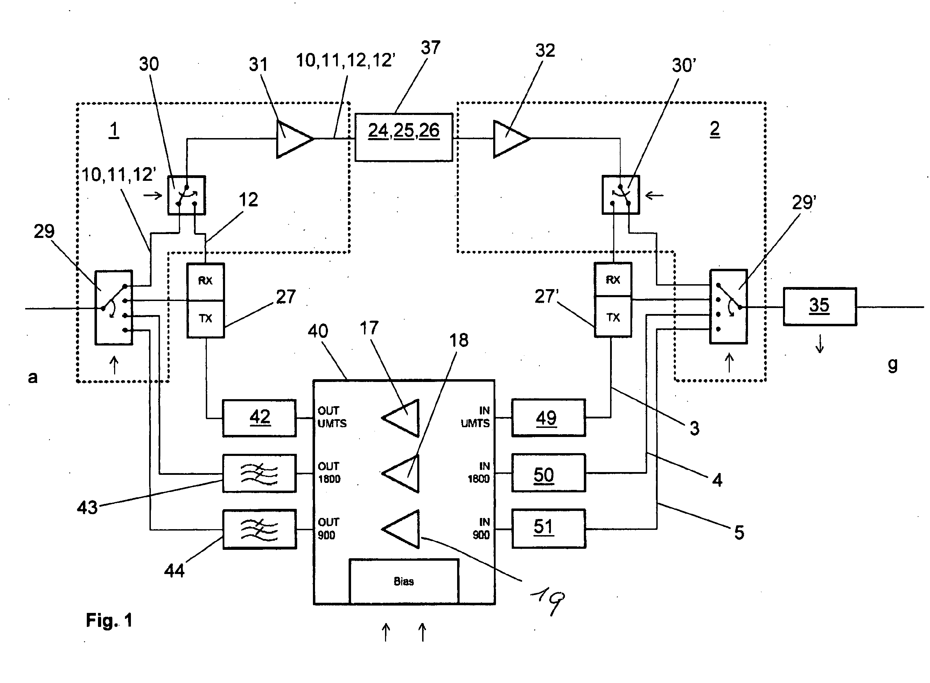

Wie bereits eingangs dargestellt, sind in dem Frontend-Modul mindestens ein Splitter und in dem Backend-Modul mindestens ein Kombinierer angeordnet. Entsprechend grundsätzlicher Ausbildungsformen der Schaltungsanordnung, wie sie in den Ausführungsbeispielen der später noch zu erläuternden Figuren 1, 4, 6 und 7 gegeben sind, ist dabei die Anordnung nur eines Splitters in dem Frontend-Modul und die Anordnung nur eines Kombinierers in dem Backend-Modul zur Lösung der gestellten Aufgabe ausreichend. Bei diesen Ausbildungsformen werden alle über die Empfangszweige übertragenen Empfangssignale über den entsprechenden Splitter des Frontend-Moduls, den entsprechenden Kombinierer des Backend-Moduls sowie über zwischen den Ausgängen des Splitters und den Eingängen des Kombinierers in der externen Beschaltung der Module angeordnete Frequenz- und/oder Bandfilter geführt. Dies gilt unabhängig davon, ob es sich bei den Empfangssignalen um Empfangssignale für ein duplexfähiges Sende- und Empfangsgerät beziehungsweise nach einem duplexfähigen Übertragungsstandard oder aber um Empfangssignale nicht duplexfähiger Übertragungsstandards handelt. Gemäß einer bevorzugten Ausbildungsform der Schaltungsanordnung sind jedoch in dem Frontend-Modul zwei Splitter und in dem Backend-Modul zwei Kombinierer vorgesehen. Dabei ist ferner in dem Frontend-Modul und in dem Backend-Modul jeweils ein zusätzliches HF-Schaltmittel angeordnet, wobei das entsprechende HF-Schaltmittel in dem Frontend-Modul den parallel geschalteten Splittern vorgeschaltet und das HF-Schaltmittel in dem Backend-Modul den Ausgängen der parallel geschalteten Kombinierer nachgeschaltet ist. Beide HF-Schaltmittel werden ebenso wie die übrigen, auch bei den Varianten der grundsätzlichen Ausbildungsform vorhandenen HF-Schaltmittel durch die Detektorschaltung oder eine deren Steuersignale umsetzende Logik betätigt. Sie werden dabei in der Weise betätigt, dass im Grundzustand der Schaltungsanordnung - das heißt, die Schaltungsanordnung ist bereit zum Empfang von beliebigen der mit ihr übertragbaren Funksignale - alle über die Empfangszweige übertragenen Empfangssignale über den ersten Splitter des Frontend-Moduls, den ersten Kombinierer des Backend-Moduls sowie über die in der Außenbeschaltung zwischen den Ausgängen des ersten Splitters und den Eingängen des ersten Kombinierers angeordneten Frequenz- und/oder Bandfilter geführt werden. Sobald jedoch erstmals ein Sendesignal eines mit der Schaltungsanordnung betriebenen Sende- und Empfangsgeräts durch die Detektorschaltung detektiert wird, werden das den Splittern im Frontend-Modul und das den Kombinierern im Backend-Modul nachgeschaltete HF-Schaltmittel jeweils so umgeschaltet, dass Empfangssignale nicht duplexfähiger Funkübertragungsstandards weiterhin über den erstgenannten Splitter, die Frequenz- und/oder Bandfilter und den erstgenannten Kombinierer übertragen werden, andererseits aber Empfangssignale duplexfähiger Funkübertragungsstandards über den zweiten Splitter des Frontend-Moduls und von diesem direkt, ohne dazwischen geschaltete Filter, auf die Eingänge des zweiten Kombinierers in dem BackendModul und schließlich von diesem über den Empfangsverstärker des Backend-Moduls, die übrigen HF-Schaltmittel des Backend-Moduls sowie über den Duplexer und die Detektorschaltung dem Sende- und Empfangsgerät zugeführt werden. Der Verzicht der Nutzung der zwischen dem Frontend-Modul und dem Backend-Modul angeordneten Sende- und/oder Bandfilter für die duplexfähigen Kanäle ist dadurch möglich, dass die im Eingangsbereich des Frontend-Moduls und im Ausgangsbereich des Backend-Moduls in der Außenbeschaltung angeordneten Duplexer bereits eine entsprechende selektive Filterwirkung haben. Gleichzeitig wird durch diesen Verzicht die selbstverständlich beim Führen der Empfangssignale über die zwischen dem Frontend-Modul und dem Backend-Modul angeordneten Frequenz- und/oder Bandfilter auftretende zusätzliche Dämpfung des Empfangssignals vermieden. Auf der anderen Seite ist es jedoch im Grundzustand der Schaltungsanordnung unumgänglich, auch Empfangssignale duplexfähiger Übertragungsstandards über den ersten Splitter des Frontend-Moduls, den ersten Kombinierer des Backend-Moduls und über die zwischen ihnen angeordneten Frequenz- und/oder Bandfilter zu führen, da natürlich zunächst nicht bekannt ist, welche Art von Sende- und Empfangsgerät mit der Schaltungsanordnung betrieben wird und ob für dieses Gerät zum Aufbau einer Verbindung eingehende Empfangssignale Signale eines duplexfähigen oder eines nicht duplexfähigen Übertragungsstandards sind. Bei der beschriebenen Weiterbildung der Schaltungsanordnung mit einem zweiten Splitter im Frontend-Modul und einem zweiten Kombinierer im Backend-Modul können zudem zwischen dem entsprechenden zweiten Splitter und dem entsprechenden zweiten Kombinierer einstellbare Dämpfungsglieder angeordnet sein, um den Pegel von Empfangssignalen duplexfähiger Übertragungsstandards optimal für den Empfangsverstärker des Backend-Moduls entsprechend den beim Einbau der Schaltungsanordnung tatsächlich festgestellten Dämpfungsverhältnissen einzustellen. Entsprechende Dämpfungsglieder können für die Empfangssignale nicht duplexfähiger Übertragungsstandards, also in den anderen, über den ersten Splitter des Frontend-Moduls, die Frequenz- und Bandfilter zwischen dem Frontend-Modul und dem Backend-Modul sowie über den ersten Kombinierer des Backend-Moduls geführten Empfangszweigen als Bestandteil der vorgenannten Frequenz- und Bandfilter beziehungsweise eines entsprechenden Moduls vorgesehen sein. Entsprechendes gilt für die Grundform der Schaltungsanordnung gemäß dem Hauptanspruch. Mittels der hinsichtlich der Dämpfung einstellbaren Dämpfungsglieder wird vermieden, dass die Empfangssignale übersteuert beziehungsweise unnötigerweise auch der in ihnen enthaltene Rauschanteil mitverstärkt wird.

Die zuletzt beschriebene Ausbildungsform mit zwei Splittern und zwei Kombinierern, aber auch die grundsätzliche Ausbildungsform nach dem Hauptanspruch können dadurch weitergebildet sein, dass in dem Backend-Modul anstelle des nur einen Empfangsverstärkers mehrere Empfangsverstärker, nämlich ein Empfangsverstärker pro mit der Schaltungsanordnung nutzbarem Frequenzband und/oder Übertragungsstandard angeordnet sind, welche in den Kombinierer oder die Kombinierer integriert sind.

Entsprechend einer möglichen Ausbildungsform der Erfindung sind die Ausgänge von Leistungsverstärkern an Sendezweigen, welche ausschließlich zur Übertragung CDMA-basierter Sendesignale genutzt werden, mit einem Isolator beziehungsweise Circulator beschaltet. Dabei ist der entsprechende Isolator/Circulator zwischen dem Ausgang des jeweiligen Leistungsverstärkers und einem diesen nachgeschalteten Duplexer angeordnet. Ferner sind vorzugsweise die Ausgänge einzelner Leistungsverstärker mit Sperrfiltern zum Sperren harmonischer Oberwellen des jeweiligen Sendesignals beschaltet.

Die Erfindung ist besonders vorteilhaft dadurch ausgebildet, dass die Steuersignale der Detektorschaltung auch den Leistungsverstärkern oder einem Leistungsverstärkermodul zugeführt werden und mit ihrer Hilfe gerade nicht benötigte Leistungsverstärker vollständig oder zumindest HF-mäßig abgeschaltet werden.

Die Erfindung soll nachfolgend anhand von Ausführungsbeispielen nochmals näher erläutert werden. In den zugehörigen Zeichnungen zeigen:
- Fig. 1:: Eine mögliche Ausbildungsform der erfindungsgemäßen Schaltungs- anordnung
- Fig. 2:: Den Bereich des Übergangs zwischen dem Frontend-Modul und dem Backend-Modul bei der Ausbildungsform gemäß Fig. 1
- Fig. 3:: Die Detektorschaltung der Ausbildungsform nach Fig. 1
- Fig. 4:: Eine weitere mögliche Ausbildungsform der erfindungsgemäßen Schaltungsanordnung,
- Fig. 5:: Das Frontend- und das Backend-Modul einer besonders universellen Ausbildungsform der erfindungsgemäßen Schaltungsanordnung,
- Fig. 6:: Eine mögliche Beschaltung des Frontend- und des Backend-Moduls gemäß Fig. 5,
- Fig. 7:: Eine weitere Möglichkeit der Beschaltung der Module gemäß Fig. 5.
- Fig. 8: Eine Variante des Frontend-Moduls mit zwei Splittern im Ausgangsbereich
- Fig.9: Eine Variante des Backend-Moduls mit zwei Kombinierern beziehungsweise Combinern im Eingangsbereich

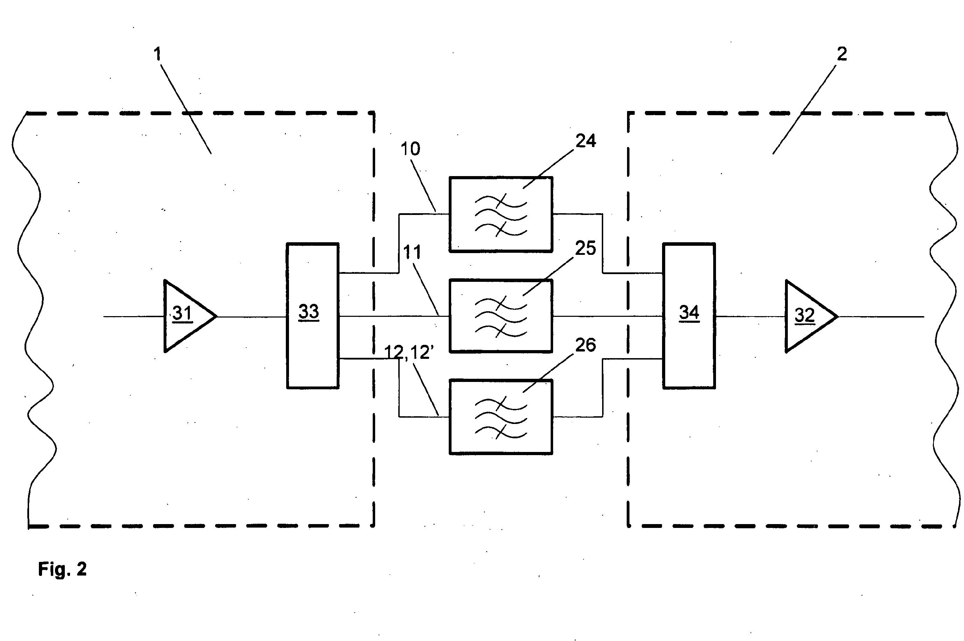

Die Fig. 1 zeigt das Blockschaltbild einer möglichen Ausbildungsform der erfindungsgemäßen Schaltungsanordnung. Die Schaltungsanordnung ist modular und folglich mehrteilig aufgebaut. Sie besteht im Wesentlichen aus einem antennenseitig a angeordneten Frontend-Modul 1, einem geräteseitig g angeordneten Backend-Modul 2, zwischen dem Frontend-Modul 1 und dem Backend-Modul 2 angeordneten und vorliegend in einem Modul 37 zusammengefassten Frequenz- und/oder Bandfiltern 24, 25, 26, einer Detektorschaltung 35, einem Leistungsverstärkermodul 40 mit Leistungsverstärkern 17, 18, 19 und vorgeschalteten Dämpfungsgliedern 49, 50, 51 und weiteren zwischen dem Frontend-Modul 1 und dem Backend-Modul 2 sowie dem Leistungsverstärkermodul 40 ausgangsseitig und eingangsseitig angeordneten Filtern, wie Harmonic-Filtern 43, 44, 45, 46, 47, 48. Das Frontend-Modul 1 besteht erfindungsgemäß aus HF-Schaltmitteln 29,30, welche durch Steuersignale der Detektorschaltung 35 geschaltet werden, einem breitbandigen Empfangsverstärker 31 und einem in der Fig. 1 nicht dargestellten Splitter 33 (siehe hierzu Fig. 2). Es ist antennenseitig a angeordnet und über ein HF-Kabel unmittelbar mit einer externen Antenne verbunden, über welche, in der Figur nicht gezeigte, mit der Schaltungsanordnung betriebene Mobilfunkgeräte HF-Signale empfangen und aussenden. Das Backend-Modul 2 besteht ebenfalls aus durch die Detektorschaltung 35 betätigen HF-Schaltmitteln 29', 30' sowie einem, in diesem Falle ebenfalls breitbandigen Empfangsverstärker 32 und umfasst darüber hinaus in seinem Eingangsbereich einen Combiner 34 (siehe hierzu Fig. 2). Es ist über die Detektorschaltung 35 und ein HF-Kabel oder einen Koppler (induktiver oder kapazitiver Koppler) mit einem mit der Schaltung betreibbaren, in der Figur nicht dargestellten Mobilfunkgerät verbunden. Die Ausgänge des Frontend-Moduls 1 und die Eingänge des Backend-Moduls 2 sind in dem Blockschaltbild der Fig. 1 jeweils als ein Aus- beziehungsweise Eingang dargestellt. Eine detaillierte Darstellung des Ausgangsbereichs des Frontend-Moduls 1 sowie des Eingangsbereichs des Backend-Moduls 2 ist in der Fig. 2 gegeben.

Durch die in Abhängigkeit des jeweiligen Schaltzustandes miteinander verbindbaren HF-Schaltmittel 29, 30 des Frontend-Moduls 1, dessen breitbandigen Empfangsverstärker 31 und seinen Splitter 33, die zwischen dem Frontend-Modul 1 und dem Backend-Modul 2 angeordneten Filter 24, 25, 26, den Combiner 34 und den Empfangsverstärker 32 des Backend-Moduls 2 und dessen ebenfalls in Abhängigkeit des Schaltzustandes miteinander verbindbare HF-Schaltmittel 29', 30' sowie die für Empfangssignale transparente Detektorschaltung 35 sind zwischen der Antenne und einem mit der Schaltungsanordnung betriebenen Mobilfunkgerät mehrere Empfangszweige 10, 11, 12, 12' gebildet. Ferner sind durch die Schaltungsanordnung über das Leistungsverstärkermodul 40 mit den vorgeschalteten Dämpfungsgliedern 49 50, 51 und die zwischen dem Leistungsverstärkermodul 40 sowie dem Frontend-Modul 1 und dem Backend-Modul 2 angeordneten Filter und Dämpfungsglieder 43, 44, 49, 50, 51 mehrere Sendezweige 3, 4, 5 ausgebildet.

Die beispielhaft dargestellte Schaltungsanordnung ist für den wahlweisen Betrieb von Mobilfunkgeräten ausgelegt, welche entweder nach dem GSM900-, dem DCS- beziehungsweise dem GSM1800-Standard oder aber nach dem UMTS-Standard arbeiten. In dem dargestellten Grundschaltzustand sind die über die Empfangsverstärker 31, 32 des Fronend-Moduls 1 und des Backend-Moduls 2 geführten Empfangszweige 10, 11, 12' der Schaltungsanordnung aktiv geschaltet. Die HF-Schaltmittel 29, 29', 30, 30' im Frontend- und im BackendModul 1, 2 weisen einen entsprechenden Schaltzustand auf. Sofern nun von der Detektorschaltung 35 ein von einem angeschlossenen Mobilfunkgerät ausgehendes Sendesignal detektiert wird, werden die HF-Schaltmittel 29, 29', 30, 30' im Frontend- und Backend-Modul 1, 2 durch entsprechende Steuersignale der Detektorschaltung 35 in ihrem Schaltzustand verändert.

Sofern es sich bei dem detektierten Sendesignal um ein UMTS-Signal handelt, nimmt die Schaltungsanordnung nachfolgend für die Dauer des Bestehens einer Verbindung zu diesem Mobilfunkgerät einen Betriebsmodus ein, in welchem das Mobilfunkgerät mit der Antenne gleichzeitig über den Empfangszweig 12 und den Sendezweig 3 verbunden ist. Der Empfangszweig 12 und der Sendezweig 3 sind sowohl antennenseitig a als auch geräteseitig g an einem Duplexfilter beziehungsweise Duplexer 27, 27' zusammengeführt. Einem nicht dargestellten, mit der Schaltungsanordnung betriebenen Mobilfunkgerät ist dadurch entsprechend den Spezifikationen des UMTS-Standards ein voll duplexfähiger Betrieb ermöglicht. Handelt es sich jedoch bei dem durch die Detektorschaltung detektierten Sendesignal um das Sendesignal eines nach dem GSM-Standard arbeitenden Mobilfunkgerätes, so geht die Schaltungsanordnung in einen Betriebsmodus über, bei dem die HF-Schaltmittel im Frontend- und BackendModul 1, 2, entsprechend der Zeitschlitzsteuerung des GSM-Standards, durch entsprechende Steuersignale der Detektorschaltung 35 wechselweise zur Führung der Signale über den entsprechend dem verwendeten Frequenzband zutreffenden Empfangszweig 10, 11 und den damit korrespondierenden Sendezweig 4, 5 geschaltet werden. Das heißt, solange eine Verbindung zu dem entsprechenden Mobilfunkgerät besteht, wird in Anwesenheit eines durch die Detektorschaltung 35 erkannten Sendesignals des Mobilfunkgeräts der entsprechende Sendezweig 4, 5 durch Umschalten der HF-Schaltmittel 29, 29', 30, 30' aktiviert und bei Fehlen des Sendesignals eine Umschaltung auf den zugehörigen Empfangszweig 10, 11 vorgenommen. Da hier kein Duplexbetrieb vorliegt, müssen die entsprechenden Empfangs- und Sendezweige 10, 11, 4, 5 nicht, wie für den UMTS-Betrieb erforderlich, an Duplexern 27, 27' zusammengeführt werden. Die Dämpfungsglieder 49, 50, 51 vor dem Leistungsverstärkermodul 40 dienen der Anpassung der Eingänge des Verstärkermoduls 40 an die in den Signalwegen zwischen dem Sende- und Empfangsgerät und der externen Antenne jeweils festgestellte Dämpfung. Dies ist erforderlich, um bei bekannter Verstärkung der Leistungsverstärker 17, 18, 19 an deren Ausgängen jeweils ein hinsichtlich seines Pegels definiertes Ausgangssignal zur Verfügung zu haben.

In dem in der Fig. 1 dargestellten Beispiel sind den Ausgängen der Leistungsverstärker 18, 19 für die GSM-Sendezweige noch Oberwellenfilter 43, 44 zur Unterdrückung von Oberwellen nachgeschaltet. Dem Leistungsverstärker 17 des UMTS-Sendezweiges 3 ist ein so genannter Isolator beziehungsweise Circulator 42 nachgeschaltet, welcher sicher verhindert, dass gegebenenfalls über das Duplexfilter 27 hinweg in den Sendezweig 3 gelangende Empfangssignale auf den Ausgang des Leistungsverstärkers 17 des UMTS-Zweiges geführt werden.

Die Fig. 2 zeigt Teile des Frontend- und des Backend-Moduls 1, 2, nämlich den Ausgangsbereich des Frontend-Moduls 1 und den Eingangsbereich des Backend-Moduls 2, und die bei dem Ausführungsbeispiel gemäß der Fig. 1 zwischen dem Ausgang des Frontend-Moduls 1 und dem Eingang des Backend-Moduls 2 angeordneten Frequenz- beziehungsweise Bandfilter 24, 25, 26. Zu sehen ist der Splitter 33 des Frontend-Moduls 1, beispielsweise ein Bipolartransistor, welcher das Ausgangssignal des ihm vorgeschalteten, hier nicht dargestellten Empfangsverstärkers des Frontend-Moduls aufteilt, wofür beispielsweise mit dem Emitter des Bipolartransistors die drei Frequenzbeziehungsweise Bandfilter 24, 25, 26 jeweils über einen Widerstand von 50 Ω (hier nicht gezeigt) verbunden sind. Der ursprünglich, bis zum Ausgang des Empfangsverstärkers 31 des Frontend-Moduls 1 noch gemeinsame Empfangszweig 10, 11, 12, 12' für GSM900-, GSM1800- und UMTS-Signale wird hierdurch im Bereich des Übergangs zum Backend-Modul 2 in drei Empfangszweige 10, 11 und 12 beziehungsweise 12', also je einen Empfangszweig für jeden der drei mit der erfindungsgemäßen Schaltungsanordnung zu nutzenden Mobilfunkstandards unterteilt. Die Frequenz- beziehungsweise Bandfilter 24, 25, 26 beziehungsweise Bandpässe zwischen dem Frontend-Modul 1 und dem Backend-Modul 2 lassen folglich immer nur Empfangssignale innerhalb des jeweiligen Frequenzbandes durch. Dabei sind die drei Frequenz- beziehungsweise Bandfilter 24, 25, 26 vorzugsweise ebenfalls in einem gemeinsamen Filtermodul 37, einem so genannten Kammfilter, angeordnet. Die ein jeweiliges Empfangssignal aufgrund der Filter 24, 25, 26 zwischen dem Frontend-Modul 1 und dem Backend-Modul 2 frequenzselektiv übertragenden Empfangszweige 10, 11, 12, 12' werden im Eingangsbereich des Backend-Moduls 2 durch dessen hier angeordneten Combiner 34 wieder zusammengeführt. Danach wird das jeweilige Eingangssignal durch den dem Combiner beziehungsweise Kombinierer 34 nachgeschalteten Empfangsverstärker 32 des Backend-Moduls 2 nochmals verstärkt, um die durch die Schaltungsanordnung selbst verursachte Dämpfung, namentlich die durch ihre bezüglich empfangener Signale vor dem Empfangsverstärker 32 angeordneten Schaltungskomponenten, wie insbesondere die Frequenz- beziehungsweise Bandfilter 24, 25, 26, verursachte Dämpfung, wieder auszugleichen.

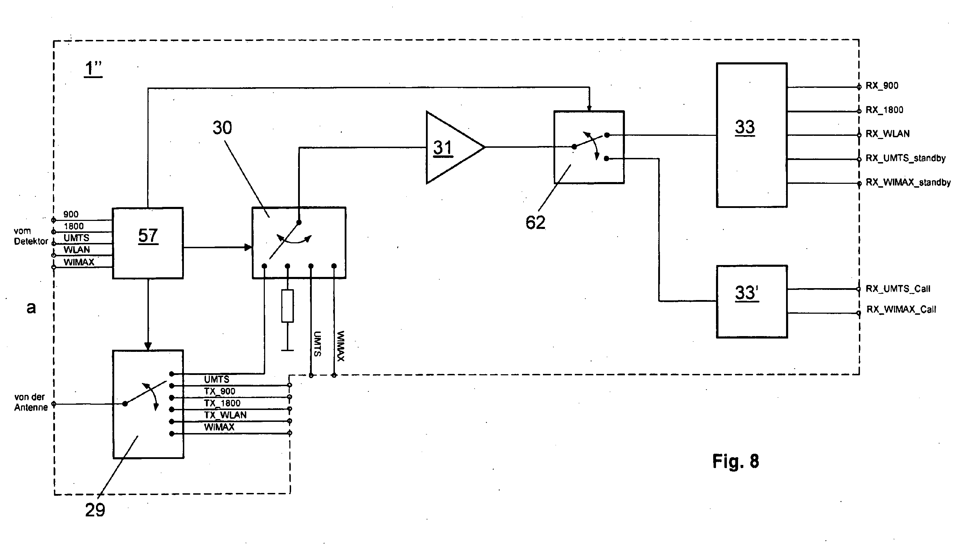

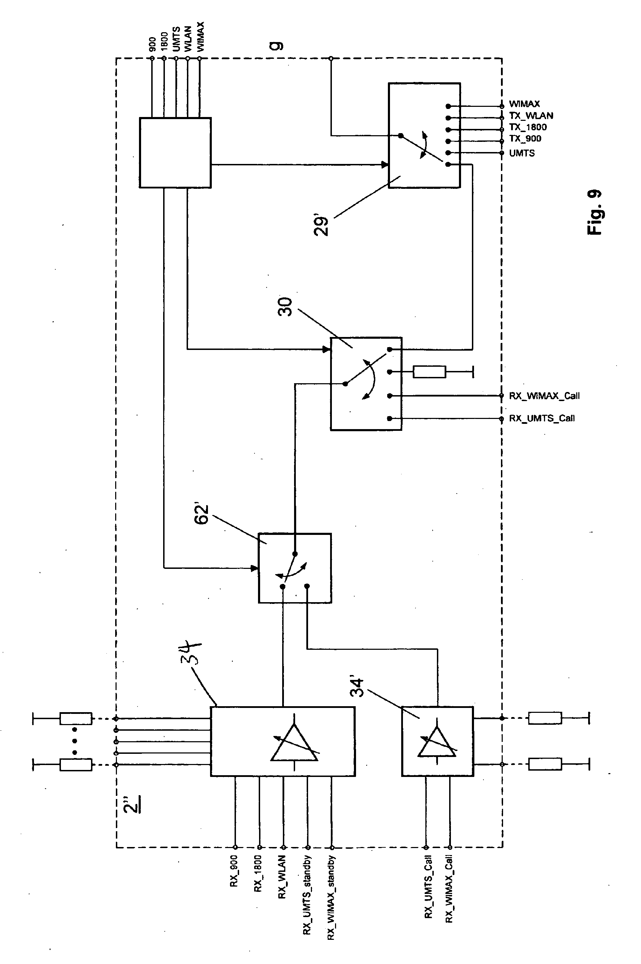

Wie bereits früher dargestellt, können anstelle des Splitters 33 in einem gemäß Fig. 8 ausgebildeten Frontend-Modul 1" auch zwei Splitter 33, 33' angeordnet und anstelle des einen Kombinierers 34 in einem Backend-Modul 2" gemäß Fig. 9 zwei Kombinierer 34, 34' vorgesehen sein. Wie aus der Fig. 8 ersichtlich, ist in diesem Falle zwischen dem Empfangsverstärker 31 und den beiden Splittern 33, 33' des Frontend-Moduls 1" zudem ein zusätzliches, durch das Signal der Detektorschaltung 35 betätigtes HF-Schaltmittel 62 angeordnet, mittels welchem ein Umschalten des Empfangsweges zwischen den beiden Splittern 33, 33' ermöglicht wird. Ebenso ist zwischen den Kombinierern 34, 34' des Backend-Moduls 2" gemäß Fig. 9 und dem Empfangsverstärker 32 ein zusätzliches HF-Schaltmittel 62 zur Umschaltung zwischen den Ausgängen der Kombinierer 34, 34' vorgesehen. Dabei sind die Ausgänge des Splitter 33' in dem Frontend-Modul 1" nach Fig. 8 unmittelbar, das heißt ohne Zwischenschaltung von Frequenz- und/oder Bandfiltern 24, 25, 26, jedoch gegebenenfalls unter Zwischenschaltung von Dämpfungsgliedern zur Einstellung des Eingangspegels für den oder die Empfangsverstärker in dem Backend-Modul 2" nach Fig. 9, mit den Eingängen eines des Kombinierers 34' in dem Backend-Modul 2" verbunden. Nach der erstmaligen Detektion eines Sendesignals werden dabei über die entsprechenden Empfangszweige mit dem Splitter 33' und dem Kombinierer 34' die für ein mit der Schaltungsanordnung betriebenes, nach einem duplexfähigen Übertragungsstandard arbeitendes Mobilfunkgerät bestimmten Empfangssignale für die Dauer des Bestehens einer Verbindung zu dem betreffenden Mobilfunkgerät übertragen.

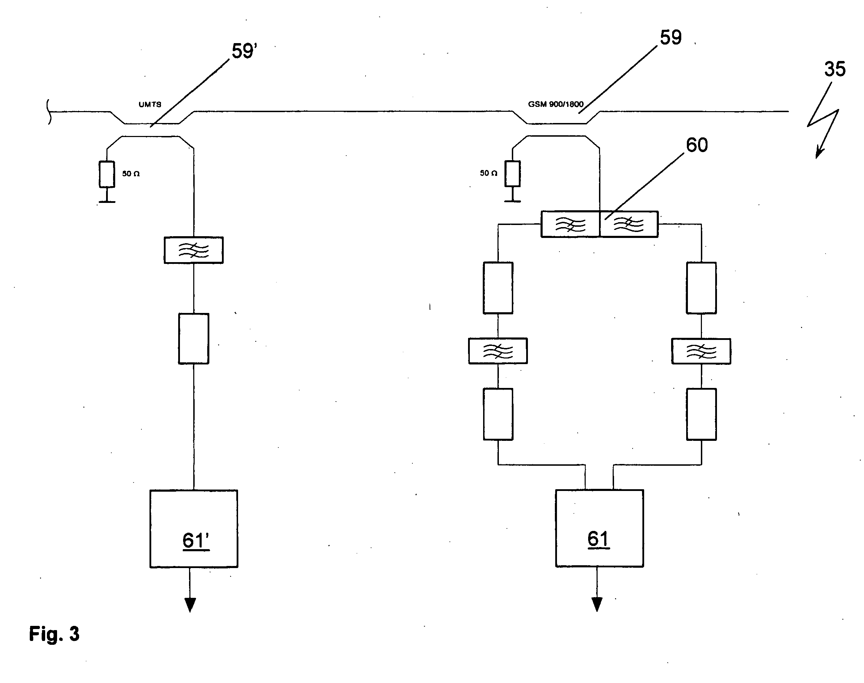

In der Fig. 3 ist die dem Backend-Modul 2, in Bezug auf Sendesignale eines mit der Schaltungsanordnung betriebenen Mobilfunkgeräts, geräteseitig g vorgeschaltete Detektorschaltung 35 beispielhaft dargestellt. Auch hierbei kann es sich um ein Modul handeln. Dabei wird ein entsprechendes, von dem Mobilfunkgerät ausgehendes Sendesignal durch Leitungskoppler 59, 59' ausgekoppelt. Die Detektorschaltung 35 verfügt über einen Leitungskoppler 59' für UMTS-Sendesignale und einen Leitungskoppler 59 für GSM900/1800-Sendesignale. Die Differenzierung von Sendesignalen nach dem GSM-Standard bezüglich des jeweiligen Frequenzbandes erfolgt durch eine Filtereinheit, einen so genannten Diplexer 60. Über die in der Figur unten dargestellten Logiken 61, 61' werden, in Abhängigkeit der Art des jeweils detektierten Sendesignals, unterschiedliche Steuersignale generiert und ausgegeben, welche in der in Fig. 1 ersichtlichen Weise den HF-Schaltmitteln 29, 29', 30, 30' im Frontend- und im Backend-Modul 1, 2 zugeführt werden. Durch die HF-Schaltmittel 29, 29', 30, 30' wird auf der Grundlage dieser Steuersignale der jeweils richtige Schaltungszweig in die Verbindung zwischen der Antenne und dem Mobilfunkgerät geschaltet, also als Signalpfad aktiv geschaltet.

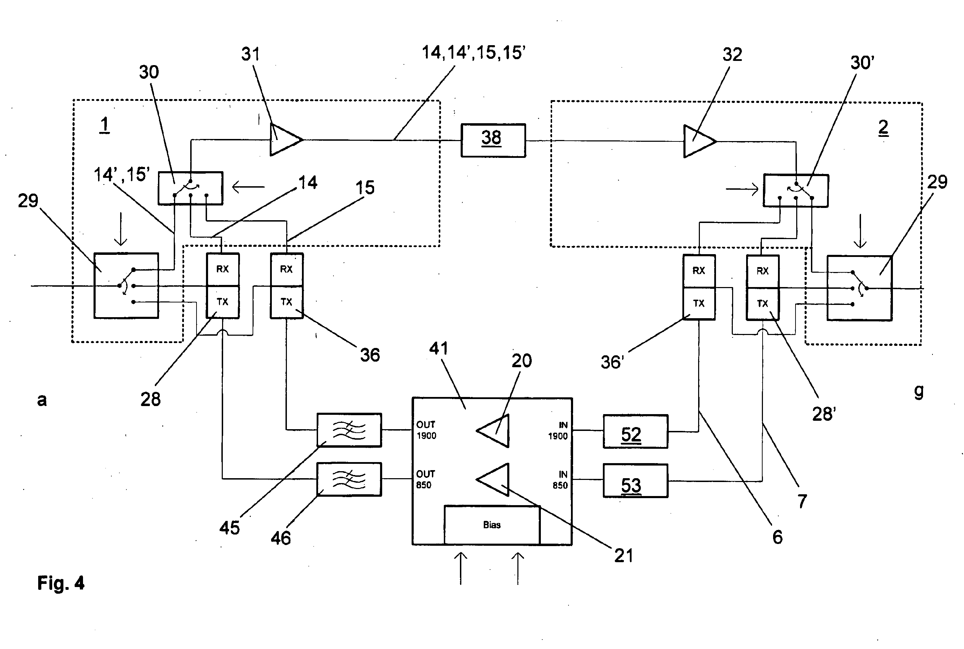

Die Fig. 4 zeigt ein weiteres Ausführungsbeispiel der erfindungsgemäßen Schaltungsanordnung, welches für den Betrieb mit Mobilfunkgeräten ausgelegt ist, die wahlweise nach einem der beiden US-GSM-Mobilfunkstandards oder nach einem der im gleichen Frequenzbereich angesiedelten CDMA-Standards arbeiten. Das Frontend-Modul 1 und das Backend-Modul 2 sind wiederum über Duplexer 28, 28', 36, 36', Dämpfungsglieder 52, 53 und Filter 45, 46 mit einem Leistungsverstärkermodul 41 verbunden. Dabei wären die vier in der Schaltungsanordnung vorgesehenen Duplexer 28, 28', 36, 36' entbehrlich, sofern die Schaltungsanordnung nur für den Betrieb mit nach den US-GSM-Standards arbeitenden Mobilfunkgeräten vorgesehen wäre. Damit jedoch auch voll duplexfähige CDMA-Geräte mit der Schaltungsanordnung betrieben werden können, sind die genannten Duplexer 28, 28', 36, 36' erforderlich. Auch zu diesem Beispiel soll auf eine nähere Erläuterung des Leistungsverstärkermoduls 41 verzichtet werden. Es sei lediglich darauf hingewiesen, dass ebenso wie bei der Ausführungsform nach Fig. 1 vorzugsweise die Leistungsverstärker 20, 21 auf der Basis ihnen zugeführter Steuersignale der hier nicht gezeigten Detektorschaltung 35 bei Fehlen eines Sendesignals des mit der Schaltungsanordnung betriebenen Mobilfunkgeräts HF-mäßig außer Betrieb genommen werden. Dies bietet sich insbesondere beim Betrieb nach dem zeitschlitzgesteuerten GSM-Verfahren arbeitender Mobilfunkgeräte an.

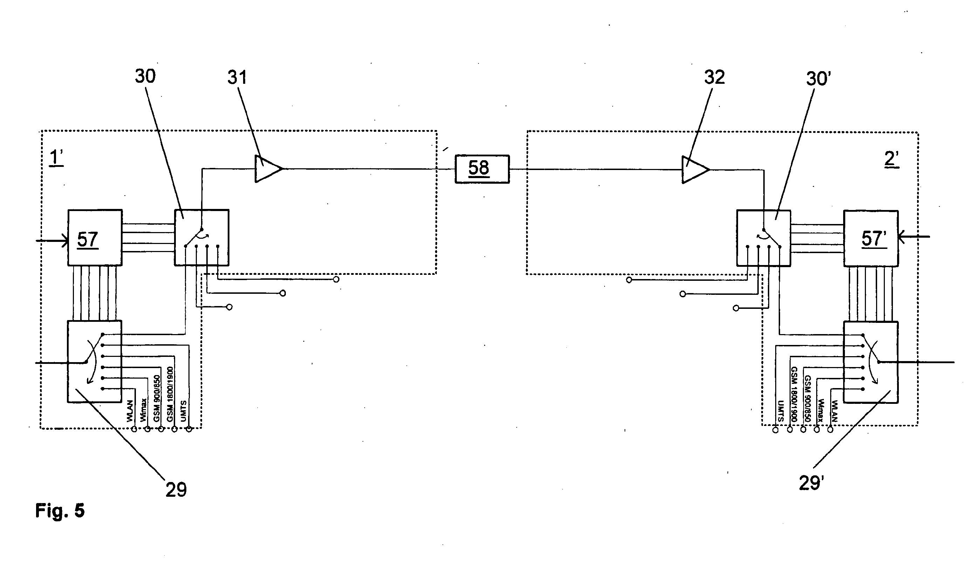

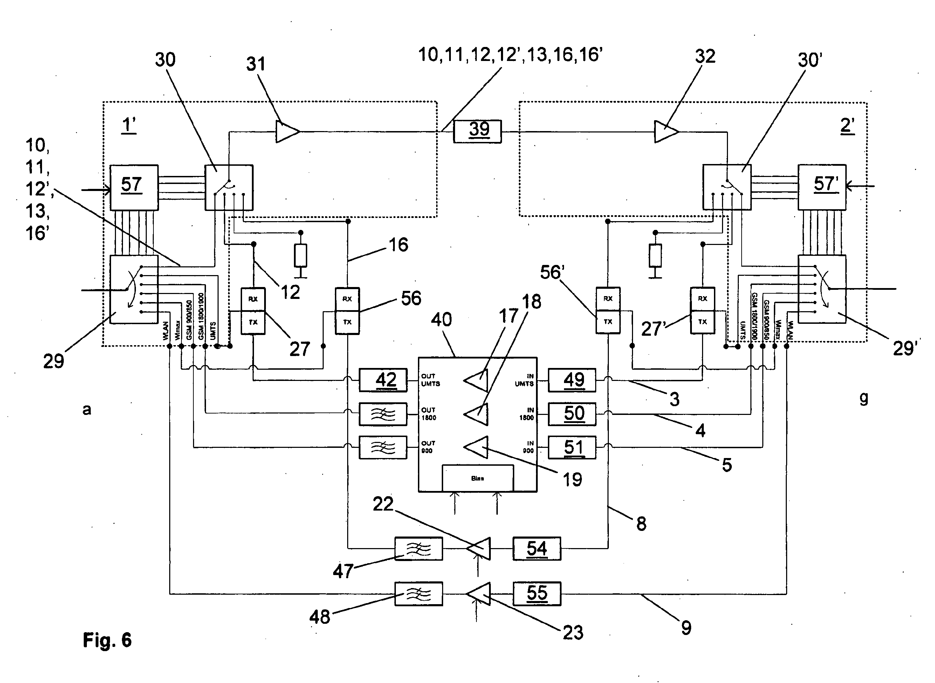

Die Fig. 5 zeigt das Frontend-Modul 1' und das Backend-Modul 2' für eine hoch universell einsetzbare Ausbildungsform der erfindungsgemäßen Schaltungsanordnung. Diese ist, wie an der Beschriftung zu erkennen, für den Betrieb mit nach dem europäischen GSM- oder DCS-Standard arbeitenden Mobilfunkgeräten, den Betrieb von UMTS-Geräten, den Betrieb von nach den US-GSM-Standards arbeitenden Mobilfunkgeräten oder den Betrieb von nach in den USA gebräuchlichen CDMA-Standards arbeitenden Mobilfunkgeräten sowie den Betrieb für WLAN-fähige und/oder WiMAX-fähige Sende- und Empfangseinheiten konfigurierbar. Welche der Geräte mit dieser Schaltungsanordnung jeweils tatsächlich betrieben werden können, hängt dabei lediglich von der Außenbeschaltung des Frontend- und des Backend-Moduls 1', 2', so unter anderem von der Auswahl des Moduls 58 mit entsprechenden, zwischen den hier nicht gezeigten Splitter 33 des Frontend-Moduls 1' und den ebenfalls nicht dargestellten Combiner 34 des Backend-Moduls 2' geschalteten Frequenz- beziehungsweise Bandfiltern, aber auch den verwendeten Leistungsverstärkern, ab. Auch diese Außenbeschaltung kann, wie durch das Filtermodul 58 angedeutet und bereits in den vorangegangenen Beispielen gezeigt, teilweise modular ausgebildet sein. So zeigt die Fig. 6 eine Außenbeschaltung der in der Fig. 5 dargestellten Module (Frontend- und Backend-Modul), mit welcher die Schaltungsanordnung für den wahlweisen Betrieb von GSM900-, GSM1800-, UMTS-, WiMAX- oder WLAN-Geräten geeignet ist. Nicht genutzte Anschlüsse des Frontend-Moduls 1' oder Backend-Moduls 2' beziehungsweise ihrer HF-Schaltmittel 29, 29', 30, 30' werden, wie aus der Figur ersichtlich, mit einem Widerstand gegen Masse abgeschlossen.

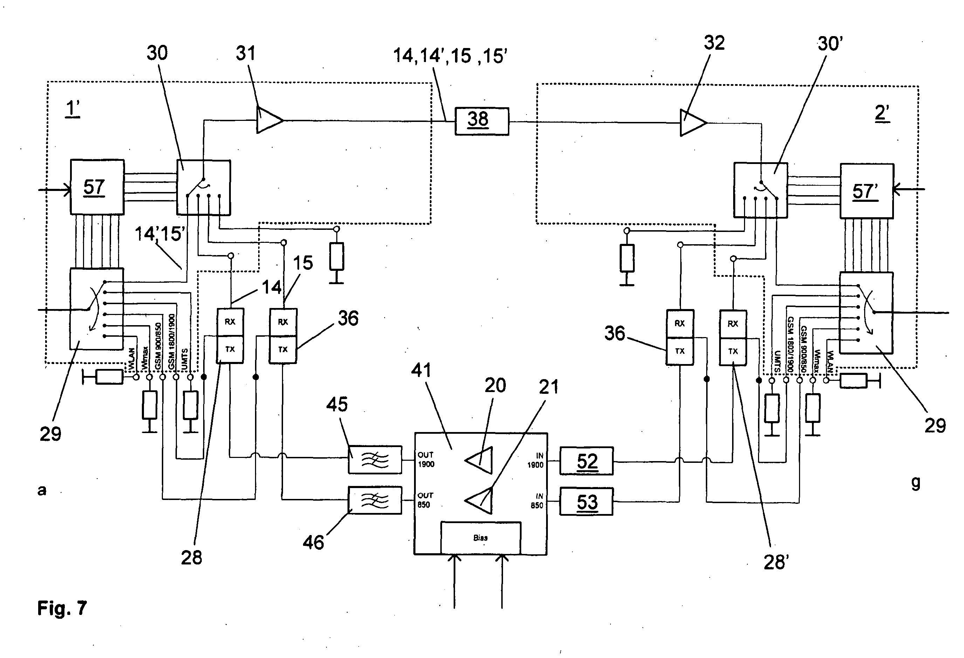

Das in der Fig. 5 gezeigte Frontend-Modul 1' und das Backend-Modul 2' können aber auch mit einer Außenbeschaltung gemäß der Fig. 7 versehen sein und so für den Einsatz mit Mobilfunkgeräten nach den beiden US-GSM-Standards und den in den USA gebräuchlichen CDMA-Mobilfunkstandards konfiguriert sein. Auch hier sind die nicht benutzten Anschlüsse des Frontend-Moduls 1' und des Backend-Moduls 2' über Widerstände gegen Masse abgeschlossen. Das Frontend-Modul gemäß Fig. 8 und das Backendmodul gemäß Fig. 9 sind ebenso universell einsetzbar. Bei den Ausbildungsformen gemäß den Figuren 5 bis 9 werden die HF-Schaltmittel 29, 29', 30, 30' nicht unmittelbar durch das Ausgangssignal der Detektorschaltung 35 betätigt sondern durch je eine im Frontend-Modul 1' und im Backend-Modul 2' angeordnete, das Ausgangssignal der Detektorschaltung 35 umsetzende und von ihr angesteuerte Logik 57, 57'.

Liste der verwendeten Bezugszeichen
- 1, 1', 1": Frontend-Modul
- 2, 2', 2": Backend-Modul
- 3 - 9: Sendezweig
- 10 - 16: Empfangszweig
- 17 - 23: Leistungs- beziehungsweise Sendeverstärker
- 24, 25, 26: Frequenz- und/oder Bandfilter
- 27, 27': Duplexer
- 28, 28': Duplexer
- 29, 29': HF-Schaltmittel
- 30, 30': HF-Schaltmittel
- 31,32: Empfangsverstärker
- 33: Splitter
- 34: Kombinierer beziehungsweise Combiner
- 35: Detektorschaltung
- 36, 36': Duplexer
- 37,38,39: Kammfiltermodul
- 40, 41: Verstärkermodul
- 42: Isolator oder Circulator
- 43 - 48: Harmonic-Filter
- 49 - 55: Dämpfungsglied
- 56, 56': Duplexer
- 57, 57': (Schalt-) Logik
- 58: Filtermodul
- 59, 59': Leitungskoppler
- 60: Diplexer
- 61, 61': (Schalt-) Logik
- 62, 62': HF-Schaltmittel

## Patentansprüche

1. Mehrbandfähige Schaltungsanordnung zum Kompensieren der in Signalwegen zwischen einem Sende- und Empfangsgerät für die Funkkommunikation und einer mit diesem Sende- und Empfangsgerät genutzten externen, von dem Sende- und Empfangsgerät getrennt angeordneten Antenne auftretenden Dämpfung, welche mehrere antennenseitig (a) und geräteseitig (g) zusammengeführte Sendezweige (3, 4, 5, 6, 7, 8, 9) und Empfangszweige (10, 11, 12, 12', 13, 14, 14', 15, 15' 16, 16') aufweist und zumindest aus Leistungsverstärkern (17, 18, 19, 20, 21, 22, 23), Empfangsverstärkern (31, 32), HF-Schaltmitteln (29, 29', 30, 30'), mindestens einem Splitter (33), mindestens einem Kombinierer (34), einer Detektorschaltung (35) zur Detektion von Sendesignalen des Sendeund Empfangsgeräts und zur Ansteuerung der HF-Schaltmittel (29, 29', 30, 30') sowie Duplexern (27, 27', 28, 28', 36, 36', 56, 56') und Frequenzund/oder Bandfiltern (24, 25, 26) besteht, wobei die vorgenannten Schaltungskomponenten so verschaltet und entsprechend dem jeweiligen Schaltzustand der HF-Schaltmittel (29, 29', 30, 30') miteinander in Wirkverbindung gebracht sind, dass das Sende- und Empfangsgerät sowie die externe Antenne in einem Grundzustand der Schaltungsanordnung über deren Empfangszweige (10, 11, 12', 13, 14', 15', 16') miteinander verbunden sind, während sie nach der erstmaligen Detektion eines Sendesignals des Sende- und Empfangsgeräts und für die nachfolgende Dauer des Bestehens einer Sprach- oder Datenverbindung zu dem Sende- und Empfangsgerät entweder gleichzeitig über einen Empfangszweig (12, 14, 15, 16) und einen mit diesem antennenseitig (a) und geräteseitig (g) jeweils an einem Duplexer (27, 27', 28, 28', 36, 36', 56, 56') zusammengeführten Sendezweig (3, 6, 7, 8) oder aber bei Anwesenheit eines Sendesignals über einen Sendezweig (4, 5, 9) und bei Fehlen eines Sendesignals über einen Empfangszweig (10, 11, 13) miteinander verbunden sind, **dadurch gekennzeichnet, dass** die Schaltungsanordnung zumindest teilweise modular ausgebildet ist und aus einem antennenseitig angeordneten universellen Frontend-Modul (1, 1', 1") mit HF-Schaltmitteln (29, 30) zum antennenseitigen Schalten der Signalwege, einem breitbandigen Empfangsverstärker (31) und dem mindestens einem, das Ausgangssignal des Empfangsverstärkers (31) auf mehrere Ausgänge des Frontend-Moduls (1, 1', 1") aufteilenden Splitter (33) sowie einem geräteseitig angeordneten, mit dem Sende- und Empfangsgerät über die Detektorschaltung (35) gekoppelten universellen Backend-Modul (2, 2', 2") mit HF-Schaltmitteln (29', 30') zum geräteseitigen Schalten der Signalwege, mindestens einem Empfangsverstärker (32) und dem mindestens einem, die Eingangssignale mehrerer Eingänge des Backend-Moduls (2, 2', 2") zusammenführenden Kombinierer (34) besteht, wobei das Frontend- und das Backend-Modul (1, 1', 1", 2, 2', 2") extern, mit den übrigen Schaltungskomponenten, nämlich den Leistungsverstärkern (17, 18, 19, 20, 21, 22, 23), den Duplexern (27, 27', 28, 28', 36, 36', 56, 56'), den zwischen dem Splitter (33) des Frontend-Moduls (1, 1', 1") und dem Kombinierer (34) des Backend-Moduls (2, 2', 2") angeordneten Frequenz- und/oder Bandfiltern (24, 25, 26) sowie der Detektoreinheit (35) beschaltet sind, welche entsprechend dem jeweiligen Einsatzzweck der Schaltungsanordnung sowie den dabei von dieser zu unterstützenden Frequenzbandbereichen und Funkstandards ausgebildet und bemessen sind.

2. Schaltungsanordnung nach Anspruch 1, **dadurch gekennzeichnet, dass** die zwischen dem Splitter (33) des Frontend-Moduls (1, 1', 1") und dem Kombinierer (34) des Backend-Moduls (2, 2', 2") angeordneten Bandfilter (24, 25, 26) in einem Kammfiltermodul (37, 38, 39) zusammengefasst sind.

3. Schaltungsanordnung nach Anspruch 1 oder 2, **dadurch gekennzeichnet, dass** zumindest einige der Leistungsverstärker (17, 18, 19, 20, 21, 22, 23) der Sendezweige (3, 4, 5, 6, 7, 8, 9) in einem Verstärkermodul (40, 41) zusammengefasst sind.

4. Schaltungsanordnung nach einem der Ansprüche 1 bis 3, **dadurch gekennzeichnet, dass** die Detektorschaltung (35) als ein Modul mit mehreren Detektoren zur Detektion von Sendesignalen unterschiedlicher Frequenzbänder ausgebildet ist.

5. Schaltungsanordnung nach einem der Ansprüche 1 bis 4, **dadurch gekennzeichnet, dass** die ungenutzten Anschlüsse des Frontend- und des Backend-Moduls (1, 1', 1", 2, 2', 2") jeweils mit einem Widerstand gegen Masse abgeschlossen sind.

6. Schaltungsanordnung nach einem der Ansprüche 1 bis 5, **dadurch gekennzeichnet, dass** diese durch eine entsprechende Beschaltung des Frontend-Moduls (1, 1', 1") und des Backend-Moduls (2, 2', 2") für den wahlweisen Betrieb mit einem nach dem GSM900-Standard, dem GSM1800-Standard oder dem UMTS-Standard arbeitenden Mobilfunkgerät konfigurierbar ist.

7. Schaltungsanordnung nach einem der Ansprüche 1 bis 5, **dadurch gekennzeichnet, dass** diese durch eine entsprechende Beschaltung des Frontend-Moduls (1, 1', 1") und des Backend-Moduls (2, 2', 2") für den wahlweisen Betrieb mit einem nach dem US-GSM/CDMA850-Standard oder dem US-GSM/CDMA19900-Standard arbeitenden Mobilfunkgerät konfigurierbar ist.

8. Schaltungsanordnung nach einem der Ansprüche 1 bis 5, **dadurch gekennzeichnet, dass** diese durch eine entsprechende Beschaltung des Frontend-Moduls (1, 1', 1") und des Backend-Moduls (2, 2', 2") für den wahlweisen Betrieb mit einem nach dem GSM900-Standard oder dem US-GSM/CDMA850-Standard, dem GSM1800-Standard oder dem US-GSM/CDMA1900-Standard, dem UMTS-Standard, nach dem WLAN-Standard oder nach dem WiMAX-Standard arbeitenden Sende- und Empfangsgerät konfigurierbar ist.

9. Schaltungsanordnung nach einem der Ansprüche 6 bis 8, **dadurch gekennzeichnet, dass** jedem in einem Sendezweig (3) für ein CDMA-Sendesignal angeordneten Leistungsverstärker (17) ein Isolator oder Circulator (42) nachgeschaltet ist.

10. Schaltungsanordnung nach einem der Ansprüche 6 bis 8, **dadurch gekennzeichnet, dass** den Leistungsverstärkern (18, 19, 20, 21, 22, 23) der Sendezweige (4, 5, 6, 7, 8, 9) jeweils ein Oberwellenfilter nachgeschaltet ist.

11. Schaltungsanordnung nach einem der Ansprüche 6 bis 10, **dadurch gekennzeichnet, dass** den Leistungsverstärkern (17, 18, 19, 20, 21, 22, 23) der Sendezweige (3, 4, 5, 6, 7, 8, 9) jeweils ein Dämpfungsglied (49, 50, 51, 52, 53, 54, 55) vorgeschaltet ist.

12. Schaltungsanordnung nach einem der Ansprüche 1 bis 11, **dadurch gekennzeichnet, dass** in dem Frontend-Modul (1', 1") und in dem BackendModul (2', 2") jeweils eine Logik (57, 57') zur Betätigung der HF-Schaltmittel (29, 29', 30, 30') angeordnet ist, welche die Steuersignale der Detektorschaltung (35) so umsetzt, dass die HF-Schaltmittel (29, 29', 30, 30') den, dem Grundzustand der Schaltung oder einem jeweils erkannten Sendesignal entsprechenden Schaltzustand einnehmen.

13. Schaltungsanordnung nach Anspruch 1 oder 12, **dadurch gekennzeichnet, dass** in dem Frontend-Modul (1 ") parallel zwei Splitter (33, 33') und ein zusätzliches HF-Schaltmittel (62), sowie in dem Backend-Modul (2") parallel zwei Kombinierer (34, 34') und ein zusätzliches HF-Schaltmittel (62') angeordnet sind, wobei das in dem Frontend-Modul (1") den Splittern (33, 33') zur Verzweigung zwischen ihnen vorgeschaltete zusätzliche HF-Schaltmittel (62) und das in dem Backend-Modul (2") den Kombinierern (34, 34') zum Wechsel zwischen ihren Ausgängen nachgeschaltete zusätzliche HF-Schaltmittel (62') ebenfalls unmittelbar durch die Detektorschaltung (35) oder die gegebenenfalls vorhandene, die Steuersignale der Detektorschaltung (35) umsetzende Logik (57, 57') betätigt werden, so dass im Grundzustand der Schaltungsanordnung alle Empfangszweige (10, 11, 12' 13, 14', 15', 16') über den ersten Splitter (33) des Frontend-Moduls (1"), den ersten Kombinierer (34) des Backend-Moduls (2") und die zwischen ihnen in der Außenbeschaltung angeordneten Frequenz- und/oder Bandfilter (24, 25, 26) geführt sind, aber nach der erstmaligen Detektion eines Sendesignals für die Dauer des Bestehens einer Sprach- oder Datenverbindung zu dem Sende- und Empfangsgerät nur noch die Sendezweige (10, 11, 13,) der nicht duplexfähigen Kanäle über die vorgenannten Schaltungselemente mit den Frequenz- und/oder Bandfiltern (24, 25, 26) geführt sind, während die Empfangszweige (12, 14, 15, 16) der duplexfähigen Kanäle über den zweiten Splitter (33') des Frontend-Moduls (1") und von dessen Ausgängen unmittelbar oder lediglich über zusätzliche Dämpfungsglieder auf die Eingänge des zweiten Kombinierers (34') in dem Backend-Modul (2") geführt sind.

14. Schaltungsanordnung nach Anspruch 1 oder 13, **dadurch gekennzeichnet, dass** in dem Backend-Modul (2, 2', 2") mehrere Empfangsverstärker, nämlich ein Empfangsverstärker pro mit der Schaltungsanordnung nutzbarem Frequenzband und/oder Übertragungsstandard angeordnet sind, welche in den Kombinierer (34) oder die Kombinierer (34, 34') integriert sind.

15. Schaltungsanordnung nach einem der Ansprüche 1 bis 14, **dadurch gekennzeichnet, dass** die in Sendezweigen (3, 4, 5, 6, 7, 8, 9) angeordneten Leistungsverstärker (17, 18, 19, 20, 21, 22, 23) beim Fehlen eines Sendesignals aufgrund entsprechender Steuersignale der Detektorschaltung (35) vollständig oder zumindest HF-mäßig abgeschaltet werden.

## Claims

1. A multi-band circuit arrangement for compensation of the attenuation occurring in signal paths between a transmitting and receiving device for wireless communication and an external antenna separately disposed from the transmitting and receiving device and utilized with this transmitting and receiving device, having several transmitting branches (3, 4, 5, 6, 7, 8, 9) and receiving branches (10, 11, 12, 12', 13, 14, 14', 15, 15' 16, 16') on the antenna side (a) and device side (d) and at least consisting of power amplifiers (17, 18, 19, 20, 21, 22, 23), receiving amplifiers (31, 32), HF switching means (29, 29', 30, 30'), at least one splitter (33), at least one combining element (34), a detector circuit (35) for the detection of transmission signals of the transmitting and receiving device and for controlling the HF switching means (29, 29', 30, 30') as well as duplexers (27, 27', 28, 28', 36, 36', 56, 56') and frequency and/or band-pass filters (24, 25, 26), whereby the above-named circuit components are wired up and interact with one another corresponding to the respective switching state of HF switching means (29, 29', 30, 30'), so that the transmitting and receiving device as well as the external antenna are connected with one another in a base state of the circuit arrangement via their receiving branches (10, 11, 12', 13, 14', 15', 16'), whereas when a transmission signal is first detected from the transmitting and receiving device and for the subsequent duration of the presence of a speech or data connection to the transmitting and receiving device either simultaneously via a receiving branch (12, 14, 15, 16) and a transmitting branch (3, 6, 7, 8) brought together with the latter on the antenna side (a) and on the device side (d), in each case at a duplexer (27, 27', 28, 28', 36, 36', 56, 56'), or when a transmission signal is present, they are joined together via a transmitting branch (4, 5, 9), and when a transmission signal is not present, via a receiving branch (10, 11, 13) is hereby **characterized in that** the circuit arrangement is designed at least partially in a modular manner and consists of a universal front-end module (1, 1', 1") with HF switching means (29, 30) disposed on the antenna side for switching the signal paths on the antenna side, a broadband receiving amplifier (31) and the at least one splitter (33) that divides the output signal of the receiving amplifier (31) into several outputs of the front-end module (1, 1', 1") as well as a universal back-end module (2, 2', 2") with HF switching means (29', 30') which is disposed on the device side and which is coupled with the transmitting and receiving device via the detector circuit (35) for switching the signal paths on the device side, at least one receiving amplifier (32) and the at least one combining element (34) bringing together the input signals of several inputs of the back-end module (2, 2', 2"), wherein the front-end and the back-end modules (1, 1', 1", 2, 2', 2") are wired up externally with the other circuit components, namely the power amplifiers (17, 18, 19, 20, 21, 22, 23), the duplexers (27, 27', 28, 28', 36, 36', 56, 56'), the frequency and/or band-pass filters (24, 25, 26) disposed between the splitter (33) of the front-end module (1, 1', 1") and the combining element (34) of the back-end module (2, 2', 2") as well as the detector unit (35), which are designed and dimensioned corresponding to the respective application objective of the circuit arrangement as well as the frequency band regions and wireless standards to be supported by this circuit.

2. The circuit arrangement according to claim 1, further **characterized in that** the band-pass filters (24, 25, 26) disposed between the splitter (33) of the front-end module (1, 1', 1") and the combining element (34) of the back-end module (2, 2', 2") are assembled in a comb-filter module (37, 38, 39).

3. The circuit arrangement according to claim 1 or 2, further **characterized in that** at least several of the power amplifiers (17, 18, 19, 20, 21, 22, 23) of the transmitting branches (3, 4, 5, 6, 7, 8, 9) are assembled in an amplifier module (40, 41).

4. The circuit arrangement according to one of claims 1 to 3, further **characterized in that** the detector circuit (35) is constructed as a module with several detectors for detecting transmission signals of different frequency bands.

5. The circuit arrangement according to one of claims 1 to 4, further **characterized in that** the unused connections of the front-end and the back-end modules (1, 1', 1", 2, 2', 2") are grounded each time with a resistance.

6. The circuit arrangement according to one of claims 1 to 5, further **characterized in that** the arrangement can be configured for alternative operation with a mobile wireless device operating according to the GSM-900 standard, the GSM-1800 standard or the UMTS standard by a corresponding wiring of front-end module (1, 1', 1") and back-end module (2, 2', 2").

7. The circuit arrangement according to one of claims 1 to 5, further **characterized in that** the arrangement can be configured for alternative operation with a mobile wireless device operating according to the US-GSM/CDMA-850 standard or the US-GSM/CDMA-1900 standard by a corresponding wiring of front-end module (1, 1', 1") and back-end module (2, 2', 2").

8. The circuit arrangement according to one of claims 1 to 5, further **characterized in that** the arrangement can be configured for alternative operation with a transmitting and receiving device operating according to the GSM-900 standard or the US-GSM/CDMA-850 standard, the GSM-1800 standard or the US-GSM/CDMA-1900 standard, the UMTS standard, according to the WLAN standard or according to the WiMAX standard by a corresponding wiring of front-end module (1, 1', 1") and back-end module (2, 2', 2").

9. The circuit arrangement according to one of claims 6 to 8, further **characterized in that** an isolator or circulator (42) is connected on the load side to each power amplifier (17) disposed in a transmitting branch (3) for a CDMA transmitting signal.

10. The circuit arrangement according to one of claims 6 to 8, further **characterized in that** a harmonic filter is connected on the load side each time to the power amplifiers (18, 19, 20, 21, 22, 23) of the transmitting branches (4, 5, 6, 7, 8, 9).

11. The circuit arrangement according to one of claims 6 to 10, further **characterized in that** an attenuation element (49, 50, 51, 52, 53, 54, 55) is connected on the line side each time to the power amplifiers (17, 18, 19, 20, 21, 22, 23) of the transmitting branches (3, 4, 5, 6, 7, 8, 9).

12. The circuit arrangement according to one of claims 1 to 11, further **characterized in that** a logic unit (57, 57') is disposed in each of front-end module (1', 1") and back-end module (2', 2") for actuating the HF switching means (29, 29', 30, 30'), which converts the control signals of detector circuit (35) so that the HF switching means (29, 29', 30, 30') assume the switching state corresponding to the base state of the circuit or to a switching state corresponding to the recognized transmission signal in each case.

13. The circuit arrangement according to claim 1 or 12, further **characterized in that** two splitters (33, 33') and an additional HF switching means (62) are disposed in parallel in the front-end module (1"), and two combining elements (34, 34') and an additional HF switching means (62') are disposed in parallel in the back-end module (2"), whereby the additional HF switching means (62) connected upstream to the splitters (33, 33') in the front-end module (1") for branching between them, and the additional HF switching means (62') connected downstream to the combining elements (34, 34') in the back-end module (2") for alternating between their outputs are also actuated directly by the detector circuit (35) or the logic units (57, 57') converting the optionally present control signals of the detector circuit, so that in the base state of the circuit arrangement, all receiving branches (10, 11, 12', 13, 14', 15', 16') are conducted over the first splitter (33) of front-end module (1"), the first combining element (34) of the back-end module (2") and the frequency and/or band-pass filters (24, 25, 26) disposed between them in the external wiring, but when a transmission signal is first detected, and for the duration of the presence of a speech or data connection to the transmitting and receiving device, only the transmitting branches (10, 11, 13,) of the non-duplex channels are conducted over the above-named circuit elements with the frequency and/or band-pass filters (24, 25, 26), whereas the receiving branches (12, 14, 15, 16) of the duplex channels are conducted via the second splitter (33') of front-end module (1") and from the outputs thereof, directly or only via additional attenuation elements, to the inputs of the second combining element (34') in back-end module (2").

14. The circuit arrangement according to claim 1 or 13, further **characterized in that** several receiving amplifiers, namely one receiving amplifier per frequency band and/or transmission standard that can be used with the circuit arrangement are disposed in the back-end module (2, 2', 2"), and these are integrated into the combining element (34) or the combining elements (34, 34').

15. The circuit arrangement according to one of claims I to 14, further **characterized in that** the power amplifiers (17, 18, 19, 20, 21, 22, 23) disposed in transmitting branches (3, 4, 5, 6, 7, 8, 9) are turned off completely or at least the HF is turned off when a transmission signal based on corresponding control signals of the detector circuit (35) is absent.

## Revendications

1. Circuit multibande permettant de compenser l'atténuation qui survient dans les parcours de signaux entre un appareil d'émission et de réception pour la communication radio et une antenne externe utilisée avec cet appareil d'émission et de réception et séparée de l'appareil d'émission et de réception,
le dispositif présentant plusieurs branches d'émission (3, 4, 5, 6, 7, 8, 9) et plusieurs branches de réception (10, 11, 12, 12', 13, 14, 14', 15, 15', 16, 16') raccordées à l'antenne (a) et à l'appareil (g) et étant constitué au moins d'amplificateurs de puissance (17, 18, 19, 20, 21, 22, 23), d'amplificateurs de réception (31, 32), de moyens de commutation HF (29, 29', 30, 30'), d'au moins un diviseur (33), d'au moins un combineur (34), d'un circuit de détection (35) qui détecte les signaux d'émission de l'appareil d'émission et de réception et qui commande les moyens de commutation HF (29, 29', 30, 30') ainsi que de duplexeurs (27, 27', 28, 28', 36, 36', 56, 56') et que de filtres de fréquence et/ou de bande (24, 25, 26),
lesdits composants du circuit étant raccordés et amenés à coopérer les uns avec les autres en fonction de l'état particulier de commutation des moyens de commutation HF (29, 29', 30, 30') de telle sorte que l'appareil d'émission et de réception ainsi que l'antenne externe soient reliés mutuellement par les branches de réception (10, 11, 12', 13, 14', 15', 16') du circuit lorsque le circuit se trouve dans un état de base, tandis qu'après la première détection d'un signal d'émission de l'appareil d'émission et de réception et pendant la durée ultérieure de la tenue d'une liaison vocale ou de données avec l'appareil d'émission et de réception, ils sont reliés mutuellement en même temps par une branche de réception (12, 14, 15, 16) et par une branche d'émission (3, 6, 7, 8) raccordée à la branche de réception du côté de l'antenne (a) et du côté de l'appareil (g) par un duplexeur (27, 27', 28, 28', 36, 36', 56, 56') ou, en présence d'un signal d'émission, par une branche d'émission (4, 5, 9) et en l'absence d'un signal d'émission par une branche de réception (10, 11, 13),
**caractérisé en ce que**
le circuit a une configuration au moins en partie modulaire et est constitué d'un module universel (1, 1', 1") d'extrémité avant raccordé à l'antenne et doté de commutateurs HF (29, 30) qui raccordent les parcours de signaux à l'antenne, d'un amplificateur de réception (31) à large bande, du ou des diviseurs (33) qui divisent le signal de sortie de l'amplificateur de réception (31) sur plusieurs sorties du module (1, 1', 1") d'extrémité avant, d'un module universel d'extrémité arrière (2, 2', 2"), disposé du côté de l'appareil, couplé à l'appareil d'émission et de réception par l'intermédiaire du circuit de détection (35) et doté de moyens de commutation HF (29', 30') qui raccordent les parcours de signaux du côté de l'appareil, d'au moins un amplificateur de réception (32) et du ou des combineurs (34) qui conduisent les signaux d'entrée de plusieurs entrées du module d'extrémité arrière (2, 2', 2"),
**en ce que** le module d'extrémité avant et le module d'extrémité arrière (1, 1', 1", 2, 2', 2") sont raccordés de manière externe aux autres composants du circuit, à savoir les amplificateurs de puissance (17, 18, 19, 20, 21, 22, 23), les duplexeurs (27, 27', 28, 28', 36, 36', 56, 56'), les filtres de fréquence et/ou de bande (24, 25, 26) disposés entre le diviseur (33) du module (1, 1', 1") d'extrémité avant et le combineur (34) du module (2, 2', 2") d'extrémité arrière ainsi que l'unité de détection (35), ces composants étant formés et dimensionnés en fonction de l'application particulière du circuit ainsi que des plages de fréquence et des normes radio que ce dernier doit soutenir.

2. Circuit selon la revendication 1, **caractérisé en ce que** les filtres de bande (24, 25, 26) disposés entre le diviseur (33) du module (1, 1', 1") d'extrémité avant et le combineur (34) du module (2, 2', 2") d'extrémité arrière sont rassemblés en un module de filtre en peigne (37, 38, 39).

3. Circuit selon les revendications 1 ou 2, **caractérisé en ce qu'**au moins certains des amplificateurs de puissance (17, 18, 19, 20, 21, 22, 23) des branches d'émission (3, 4, 5, 6, 7, 8, 9) sont rassemblés en un module d'amplificateur (40, 41).

4. Circuit selon l'une des revendications 1 à 3, **caractérisé en ce que** le circuit de détection (35) est configuré comme module qui présente plusieurs détecteurs permettant la détection de signaux d'émission dans différentes bandes de fréquence.

5. Circuit selon l'une des revendications 1 à 4, **caractérisé en ce que** les bornes non utilisées du module d'extrémité avant et du module d'extrémité arrière (1, 1', 1", 2, 2', 2") sont raccordées à la masse par l'intermédiaire de résistances respectives.

6. Circuit selon l'une des revendications 1 à 5, **caractérisé en ce que** par un raccordement approprié du module (1, 1', 1") d'extrémité avant et du module (2, 2', 2") d'extrémité arrière, il peut être configuré pour fonctionner sélectivement dans un appareil de radiocommunication mobile qui travaille selon la norme GSM900, la norme GSM1800 ou la norme UMTS.

7. Circuit selon l'une des revendications 1 à 5, **caractérisé en ce que** par un raccordement approprié du module (1, 1', 1") d'extrémité avant et du module (2, 2', 2") d'extrémité arrière, il peut être configuré pour fonctionner sélectivement dans un appareil de radiocommunication mobile qui travaille selon la norme US-GSM/CDMA850 ou la norme US-GSM/CDMA1900.

8. Circuit selon l'une des revendications 1 à 5, **caractérisé en ce que** par un raccordement approprié du module (1, 1', 1") d'extrémité avant et du module (2, 2', 2") d'extrémité arrière, il peut être configuré pour fonctionner sélectivement dans un appareil de radiocommunication mobile qui travaille selon la norme GSM900, la norme US-GSM/CDMA850, la norme GSM1800, la norme US-GSM/CDMA1900, la norme UMTS, la norme WLAN ou la norme WiMAX.

9. Circuit selon l'une des revendications 6 à 8, **caractérisé en ce qu'**un isolateur ou circulateur (42) est raccordé en aval de chaque amplificateur de puissance (17) disposé dans la branche d'émission (3) d'un signal d'émission CDMA.

10. Circuit selon l'une des revendications 6 à 8, **caractérisé en ce qu'**un filtre d'harmoniques supérieures est raccordé en aval des amplificateurs de puissance (18, 19, 20, 21, 22, 23) des branches d'émission (4, 5, 6, 7, 8, 9).

11. Circuit selon l'une des revendications 6 à 10, **caractérisé en ce qu'**un organe d'atténuation (49, 50, 51, 52, 53, 54, 55) est raccordé en amont des amplificateurs de puissance (17, 18, 19, 20, 21, 22, 23) des branches d'émission (3, 4, 5, 6, 7, 8, 9).

12. Circuit selon l'une des revendications 1 à 11, **caractérisé en ce qu'**une logique (57, 57') d'actionnement des moyens de commutation HF (29, 29', 30, 30') est disposée dans le module (1', 1") d'extrémité avant et dans le module (2', 2") d'extrémité arrière ces logiques convertissant les signaux de commande du circuit de détection (35) de telle sorte que les moyens de commutation HF (29, 29', 30, 30') prennent l'état de commutation qui correspond à l'état de base du circuit ou à un autre signal d'émission reconnu.

13. Circuit selon les revendications 1 ou 12, **caractérisé en ce que** deux diviseurs (33, 33') et un moyen supplémentaire de commutation HF (62) sont disposés en parallèle dans le module (1") d'extrémité avant et **en ce que** deux combineurs (34, 34') et un moyen supplémentaire de commutation HF (62') sont disposés en parallèle dans le module (2") d'extrémité arrière, le module supplémentaire de commutation HF (62) raccordé dans le module (1") d'extrémité avant en aval des diviseurs (33, 33') pour assurer la répartition entre ces derniers et le module supplémentaire de commutation HF (62') raccordé dans le module (2") d'extrémité arrière en aval des combineurs (34, 34') pour assurer le basculement entre ses sorties étant activés également de manière directe par le circuit de détection (35) ou par la logique (57, 57') éventuellement présente qui convertit les signaux de commande du circuit de détection (35), de sorte que lorsque le circuit est dans son état de base, toutes les branches de réception (10, 11, 12', 13, 14', 15', 16') passent par le premier diviseur (33) du module (1") d'extrémité avant, par le premier combineur (34) du module (2") d'extrémité arrière et par les filtres de fréquence et/ou de bande (24, 25, 26) disposés entre eux dans le circuit extérieur, mais qu'après la première détection d'un signal d'émission et pendant la durée d'une liaison vocale ou de données avec l'appareil d'émission et de réception, seuls les parcours d'émission (10, 11, 13) des canaux non duplexés passent par lesdits éléments de circuit qui présentent les filtres de fréquence et/ou de bande (24, 25, 26), tandis que les branches de réception (12, 14, 15, 16) des canaux duplexés passent par le deuxième diviseur (33') du module (1") d'extrémité avant et, directement ou uniquement par des éléments supplémentaires d'atténuation, de ses sorties aux entrées du deuxième combineur (34') du module (2 ") d'extrémité arrière.

14. Circuit selon les revendications 1 ou 13, **caractérisé en ce que** plusieurs amplificateurs de réception, à savoir un amplificateur de réception par bande de fréquence utilisable avec le circuit et/ou par norme de transmission, qui sont intégrés dans le combineur (34) ou les combineurs (34, 34'), sont intégrés dans le module (2, 2', 2") d'extrémité arrière.

15. Circuit selon l'une des revendications 1 à 14, **caractérisé en ce qu'**en cas d'absence d'un signal d'émission, les amplificateurs de puissance (17, 18, 19, 20, 21, 22, 23) disposés dans les branches d'émission (3, 4, 5, 6, 7, 8, 9) sont débranchés complètement ou au moins en termes de HF par des signaux de commande appropriés du circuit de détection (35).
